# EUROPEAN PATENT APPLICATION

(11) **EP 2 668 836 A1**
(43) Date of publication of application: **04.12.2013**
(21) Application number: 13002758.4
(22) Date of filing: 28.05.2013
(51) Int. Cl.: A01D 34/416

(54) **Head with threads and blades of a rotary motor lawn mower or scythe**

(30) Priority: 29.05.2012 SI 201200171
(71) Applicant: Zupancic, Alojz, 1210 Ljubljana (SI)
(72) Inventor: Zupancic, Alojz, 1210 Ljubljana (SI)
(74) Representative: Golmajer Zima, Marjanca

(57) **Abstract**

A head with threads and blades of a rotary motor lawn mower or scythe, wherein the head comprises a base disc **(1),** a fastening disc **(3)** concentrically arranged on the base disc **(1),** threads **(5)** and blades **(6),** wherein the blades **(6)** are arranged in a rotary manner with their drilled holes **(7)** on plugs **(8),** whereas the threads **(5)** are arranged in two holes **(10)** on the blades **(6)** and secured against falling out of the holes **(9, 10)** with a thickening **(12).**

## Description

### Subject of the Invention

The subject of the invention is a head with a thread and blades of a rotary motor lawn mower or scythe.

### Technical Problem

The technical problem solved by the present invention is how to improve a head with a thread and blades of a motor lawn mower or scythe with the purpose of extending the life time of the thread and blades and of offering a simplified method of replacing the same for a reasonable price.

### Prior Art

An invention of this type is known from Slovene patent SI-21835 (Alojz Zupan 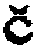 i 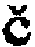 ), which is **characterized in that** blades and threads are alternatingly arranged in a rotary manner in a two-part disc. Use of such a head has shown that the threads get worn out only in the area extending over the radius defined by a free end of blades. When a thread is replaced, its length within the radius defined by the free end of blades is waste. As the threads and blades get worn out in a matter of several working hours, a field worker must always be equipped with spare threads and blades. When treads or blades are replaced, the two-part disc needs to be separated and the worn-out part replaced. The thread gets worn out considerably more rapidly than the blades. So there is a need for such thread placement that its replacement will be simpler and carried out much more rapidly on any field.

### Solution to the Technical Problem

The set technical problem is solved by a new design of thread fastening. The invention is **characterized in that** each blade is provided with two holes arranged in axial direction of the blade. The thread has a thickening at one end and is arranged on the blade in a way that it runs through both holes in the blade with the thickening being near a hole that is closest to the fastening lug of the blade.

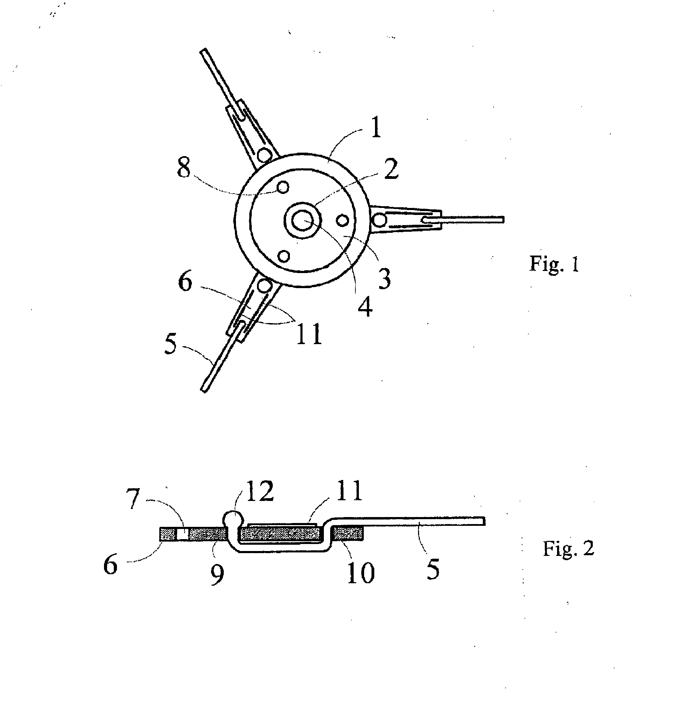

The invention will be described in more detail in the continuation by way of two embodiments and the enclosed drawings, representing in
- Fig. 1: head with blades and threads of a motor lawn mower or scythe of the invention in top view,
- Fig. 2: longitudinal cross-section of the blade with a thread.

The head with threads and blades of a rotary motor lawn mower or scythe comprises a base disc **1** intended for placement onto a shaft of any motor lawn mower or scythe, its central section **2** being adapted to each type of a scythe or lawn mower, a fastening disc **3** concentrically arranged on the base disc **1** preferably with an anticlockwise thread link **4,** threads **5** and blades **6.**

The blades **6** are arranged in a rotary manner with their drilled holes **7** on plugs **8** located in the base disc **1.** The adjacent fastening disc **3** prevents the blades from falling out of plugs **8.**

Each knife-type blade **6** comprises a drilled hole **7** at one end for placement onto the plug **8.** The blade is further provided with two holes **9** and **10** arranged in longitudinal direction of the blade **6.** The holes **9** and **10** can be round or oval. In close proximity of holes **9, 10** at least one longitudinal rib **11** can be arranged. The threads **5** can be of any type in terms of material and cross-section. Each thread **5** is provided at one end with a thickening **12** and is arranged on the blade **6** so that it runs through both holes **9, 10,** wherein the thickening **12** is arranged between the drilled hole **7** and the neighbouring hole **9** and its central part lies simultaneously between the two ribs **11.** The two ribs **11** act as a seat of a part of the thread **5** and also as a reinforcement of the blade **6.**

The blade **6** with the thread **5** of the invention makes it possible that the thread is worn out to the free end of the blade **6** and the resulting waste is considerably reduced. The replacement of the thread **5** is carried out without a need to take the blade **6** off the disc **1.** Manufacturing of the thread **5** with the thickening **12** is considerably cheaper and simpler than manufacturing of a thread with a lug as foreseen in the device mentioned in the prior art.

## Claims

1. A head with threads and blades of a rotary motor lawn mower or scythe, wherein the head comprises a base disc **(1),** a fastening disc **(3)** concentrically arranged on the base disc **(1)** preferably with an anticlockwise thread link **(4),** threads **(5)** and blades **(6),** wherein the blades **(6)** are arranged in a rotary manner with their drilled holes **(7)** on plugs **(8)** located in the base disc **(1) characterized in that** the threads **(5)** are provided at one end with a thickening (12) and arranged on the blades **(6).**

2. Head according to claim 1 **characterized in that** the blade **(6)** intended to receive the thread **(5)** is provided with two holes **(9, 10)** arranged in longitudinal direction of the blade **(6).**

3. Head according to claims 1 and 2 **characterized in that** the holes **(9, 10)** can be round or oval.

4. Head according to claims 1 to 3 **characterized in that** at least one rib **(11)** can be provided between the holes **(9, 10).**

5. Head according to claims 1 to 4 **characterized in that** the thread **(5)** is arranged on the blade **(6)** so that it runs through both holes **(9, 10),** wherein the thickening **(12)** is arranged between the drilled hole **(7)** and the neighbouring hole **(9)** and its central part lies simultaneously between the two ribs **(11).**
